# EUROPÄISCHE PATENTSCHRIFT

(11) **EP 0 861 391 B1**
(45) Veröffentlichungstag und Bekanntmachung des Hinweises auf die Patenterteilung: **09.04.2003**
(21) Anmeldenummer: 96934305.2
(22) Anmeldetag: 06.11.1996
(51) Int. Cl.: F16J 9/16

(54) **KOLBENRING**
PISTON RING
SEGMENT DE PISTON

(30) Priorität: 17.11.1995 EP 95810716
(43) Veröffentlichungstag der Anmeldung: 02.09.1998
(73) Patentinhaber: Burckhardt Compression AG, 8404 Winterthur (CH)
(72) Erfinder: FEISTEL, Norbert, CH-8408 Winterthur (CH)
(74) Vertreter: Dr. Graf & Partner
(86) Internationale Anmeldenummer: CH9600393
(87) Internationale Veröffentlichungsnummer: WO97019280

(56) Entgegenhaltungen:
- EP-A- 0 541 482
- DE-A- 1 526 610
- FR-A- 1 590 837
- FR-A- 2 561 713
- GB-A- 2 206 669

## Beschreibung

Die Erfindung betrifft einen Kolbenring gemäß dem Oberbegriff des Anspruchs 2 sowie einen Kolbenring für einen trockenlaufenden Kolbenkompressor gemäss dem Oberbegriff des Anspruchs 1.

Derartige Kolbenringe sind aus der FR-A-1 590 837 bekannt.

Zum Verdichten von Fluiden wie Gase und Dämpfe werden trockenlaufende Kolbenkompressoren verwendet, wobei am Kolben als Dichtelemente Dichtungsringe aus einem Kunststoff wie zum Beispiel PTFE verwendet werden. Solche Dichtelemente aus PTFE sind zum Beispiel in der FR-A- 1 590 837 offenbart. Derartige Dichtelemente weisen den Nachteil auf, dass sie während dem Betrieb einen hohen Verschleiss aufweisen, was zu einer ungenügenden Standzeit führt. Besonders die freien Spaltquerschnitte in axialer und radialer Richtung, die sich durch die Ringstösse und den Verschleiss der Dichtelemente ergeben, haben wesentlichen Anteil daran, dass die Dichtelemente nicht ihre volle Wirksamkeit über einen gewünschten Zeitraum erreichen. Insbesondere beim Komprimieren sehr leichter Gase wie Wasserstoff ist ein Dichtelement mit einer guten und über einen langen Zeitraum konstanten Dichtwirkung erforderlich.

Für geschmierte Anwendungen sind zum Beispiel aus FR-A- 2 561 713 zwei oder mehrteilige Dichtringe bekannt, die in der Regel aus einem Metall oder einer Metalllegierung bestehen.

Es ist Aufgabe der vorliegenden Erfindung für einen trockenlaufenden Kolbenkompressor, insbesondere zum Verdichten sehr leichter Gase, einen wirtschaftlich vorteilhafteren, insbesondere verschleissarmen Kolbenring vorzuschlagen.

Diese Aufgabe wird gelöst gemäss den Merkmalen von Anspruch 1 oder Anspruch 2. Die Unteransprüche 3 bis 6 beziehen sich auf weitere, vorteilhafte Ausgestaltungen der Erfindung.

Der erfindungsgemässe Kolbenring für einen trockenlaufenden Kolbenkompressor_besteht aus zwei einteiligen, ringförmigen Körpern mit Stossstellen, welche Körper im weiteren als Ringe bezeichnet werden. Diese Ringe sind bezüglich einer Achse C konzentrisch zueinander verlaufend angeordnet. Der erste Ring weist einen im wesentlichen L-förmigen Querschnitt auf mit einem in Richtung der Achse C verlaufenden ersten Schenkel und einem radial zur Achse C nach aussen verlaufenden zweiten Schenkel. Die beiden Schenkel weisen je eine Innenfläche auf wobei der zweite Ring derart ausgestaltet ist, dass dessen dem ersten Ring zugewandten Flächen an den Innenflächen des ersten Ringes formschlüssig anliegt. Der in radialer Richtung zur Achse C nach aussen verlaufende zweite Schenkel weist eine Innenfläche mit einem in radialer Richtung bezüglich der Achse C geneigten Verlauf auf, wobei die Neigung kleiner als 90° ist. Die Innenfläche weist eine in radialer Richtung verlaufende Tangente auf, welche Tangente die Achse C unter einem Spitzen Winkel schneidet. In einer vorteilhaften Ausgestaltung der Erfindung ist diese Innenfläche konusförmig verlaufend ausgestaltet.

Bei trockenlaufenden Kolbenkompressoren steht kein Schmiermittel zur Verfügung, um die Kolbenringe eines Kolbens zu schmieren und zusätzlich abzudichten. Daher sind metallische Kolbenringe ungeeignet für eine solche trockenlaufende Anwendung. Die trockenlaufenden Reibpaarungen funktionieren aufgrund von Festschmierstoffen, die in einem der Reibpartner enthalten sind. Der erfindungsgelnässe Kolbenring besteht daher aus einem für den Trockenlauf speziell mit Festschmierstoffen wie PTFE, Graphit oder Molybdändisulfid modifizierten Kunststoff.

Vor allem bei der Verdichtung sehr leichter Gase, wie beispielsweise Wasserstoff, auf einen sehr hohen Druck sind Dichtelemente mit einer sehr hohen Dichtwirkung erforderlich, um die Leckage möglichst niedrig zu halten. Eine gute Dichtwirkung kann beispielsweise erreicht werden, indem zwei Dichtringe so zu einem Twin-Ring kombiniert werden, dass sich keine durchgängigen Spalte oder Stösse ergeben.

Die selbstschmierende Wirkung der trockenlaufenden Reibdichtungen hat zur Folge, dass sich die schmierstoffliefernden Kolbenringe allmählich verschleissen. Bekannte Twin-Ringe aus Kunststoff weisen hier den Nachteil auf, dass die beiden Ringteile in radialer Richtung gegeneinander verschiebbar sind. Da der Druckverlauf in den der Zylinderwand zugewandten, dichtenden Teilflächen der beiden Ringflächen nicht konstant ist, ermöglicht die radiale Verschiebbarkeit, dass einer der beiden Ringteile schneller verschleisst als der andere. Dieser ungleiche Verschleiss bewirkt, dass sich die beiden Ringteile nicht mehr vollständig überdecken und so Spalte entstehen, durch die insbesondere bei sehr leichten Gasen unter hohem Druck hohe Leckgasmengen strömen, was die Fördermenge des Trockenlaufkompressors erheblich verschlechtert. Der erfindungsgemässe Kolbenring ist insbesondere für die trockenlaufende Verdichtung sehr leichter Gase auf einen hohen Verdichtungsenddruck geeignet. Der Kolbenring weist den Vorteil auf, dass durch den Aufbau aus zwei Ringteilen beziehungsweise zwei ringförmigen Körpern, deren gegenseitige Formgebung und der formschlüssigen Koppelung der beiden Ringteile während dem Betrieb an beiden Ringteilen ein gleichmässiger, harmonisierter Verschleiss erfolgt. Durch den Druck des zu komprimierenden Fluids werden die beiden Ringteile gegeneinander gepresst, wobei durch die formschlüssige Koppelung der beiden Ringteile keine oder eine nur geringe gegenseitige Relativbewegung erfolgt, so dass die zum Beispiel einer Zylinderwand zugewandten, dichtenden Teilflächen der beiden Ringteile einen gleichmässigen Materialabtrag erfahren. Auf diese Weise können sich keine oder nur geringe örtlichen Leckstellen ausbilden, wodurch bei trockenlaufenden Kolbenkompressoren die Dichtwirkung des Kolbenringes über einen langen Betriebszeitraum annähernd konstant bleibt.

Die Erfindung wird weiter an Hand von mehreren Ausführungsbeispielen beschrieben. Es zeigen:
- Fig. 1: einen Längsschnitt durch einen Kolben mit Zylinder;
- Fig. 2a: einen Querschnitt durch einen zweiten Ring;
- Fig. 2b: einen Querschnitt durch einen ersten Ring;
- Fig. 3a: eine Aufsicht auf einen zweiten Ring;
- Fig. 3b: eine Aufsicht auf einen ersten Ring;
- Fig. 4: einen Kolbenring angeordnet in einem einteiligen Kolben;
- Fig. 5: zwei Kolbenringe angeordnet in einem gebauten Kolben;
- Fig. 6a: einen Querschnitt durch ein weiteres Ausführungsbeispiel eines zweiten Ringes;
- Fig. 6b: einen Querschnitt durch ein weiteres Ausführungsbeispiel eines ersten Ringes
- Fig. 7a: eine Aufsicht auf einen zweiten Ring;
- Fig. 7b: eine Aufsicht auf einen ersten Ring.

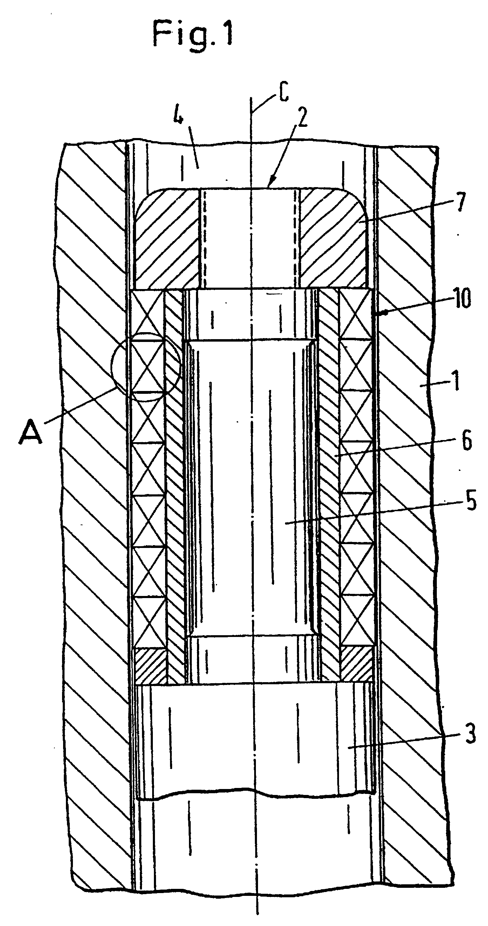

Fig. 1 zeigt einen Längsschnitt durch einen trockenlaufenden Kolbenkompressor mit einem Zylinder 1, in dem ein Kolben 2 auf- und abbeweglich angeordnet ist. Das untere Ende des Kolbens 2 geht in eine Kolbenstange 3 über, die in bekannter, nicht dargestellter Weise mit einem Kurbeltrieb verbunden ist. Oberhalb des Kolbens 2 befindet sich ein Kompressionsraum 4, in dem in bekannter, nicht dargestellter Weise beim Abwärtshub des Kolbens 2 ein zu verdichtendes Gas eingesogen wird, das beim anschliessenden Aufwärtshub verdichtet und aus dem Kompressionsraum ausgestossen wird. Der Kolben 2 weist einen stangenartigen Fortsatz 5 der Kolbenstange 3 auf, über welchen eine Hülse 6 angeordnet ist, die sieben übereinander angeordnete Kolbenringe 10 trägt. Bei einem gebauten Kolben 2 werden die Einzelteile des Kolbens 2 sowie die Kolbenringe 10 durch eine auf das obere Ende des Fortsatzes 5 aufgeschraubte Mutter 7 zusammengehalten. Ebenfalls dargestellt ist die Mittenachse C des Kolbens 2.

Der Abschnitt A ist in Fig. 5 vergrössert dargestellt, indem zwei Abschnitte A gezeigt sind. Der gebaute Kolben ist aus Einzelteilen gefertigt und umfasst die in axialer Richtung verlaufende Hülse 6, die um die Hülse 6 angeordneten Kammerringe 8a,8b sowie die in den Nuten angeordneten Kolbenringe 10, welche Kolbenringe 10 jeweils aus einem ersten Ring 10a und einem zweiten Ring 10b bestehen. Die beiden Ringe 10a,10b sind derart gegenseitig angepasst ausgestaltet, dass die sich gegenseitig berührenden Teilflächen formschlüssig aneinander zu liegen kommen. Beide Ringe 10a,10b weisen jeweils der Zylinderwand 1 zugewandte Flächen 10c,10d auf, welche während des Betriebes des Kolbens 2 auf der Zylinderwand 1 gleitend auf- und abwärts bewegt werden.

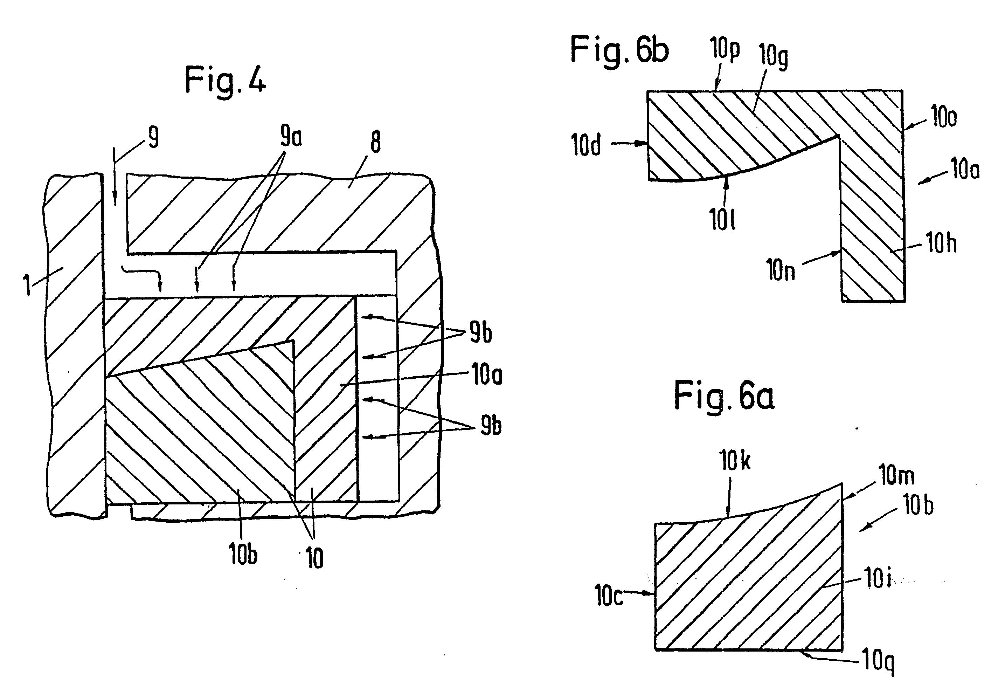

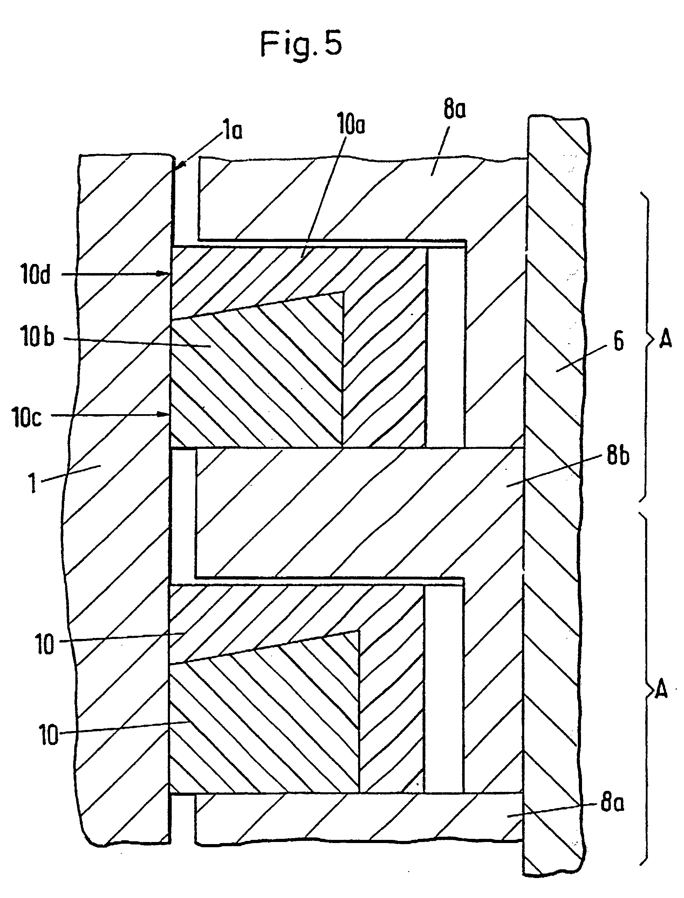

Fig. 4 zeigt einen Abschnitt A eines einteiligen Kolbens 2 mit Kammerring 8 und einem in der Nut angeordneten Kolbenring 10, welcher aus den beiden Ringen 10a,10b besteht. Das erste Ring 10a ist im Zylinder 1 zur Druckseite hin angeordnet, wobei der Gasdruck 9 sowohl in axialer Richtung 9a als auch in radialer Richtung 9b wirkende Kräfte auf den ersten Ring 10a ausübt, sodass der gesamte Kolbenring 10 erstens in radialer Richtung gegen die Innenwand des Zylinders 1 gedrückt wird und zweitens in axialer Richtung gegen die der Druckseite entfernten Begrenzungsfläche der Nut gedrückt wird. Dadurch wird die Dichtwirkung des Kolbenrings während des Betriebes erhöht und die beiden Ringe 10a, 10b sind gegenseitig formschlüssig in der Nut gehalten, ohne oder mit nur einer geringen gegenseitigen Relativbewegung. Diese gegenseitig formschlüssige Verbindung hat zur Folge, dass die auf der Zylinderwand 1a gleitenden und reibenden Teilflächen 10c,10d der beiden Ringe 10a, 10b gleichmässig abgenutzt werden, sodass keine lokale Leckstelle entsteht und die beiden Ringe 10a,10b über einen langen Betriebszeitraum gleichwirkend auf der Zylinderwand 1a aufliegen.

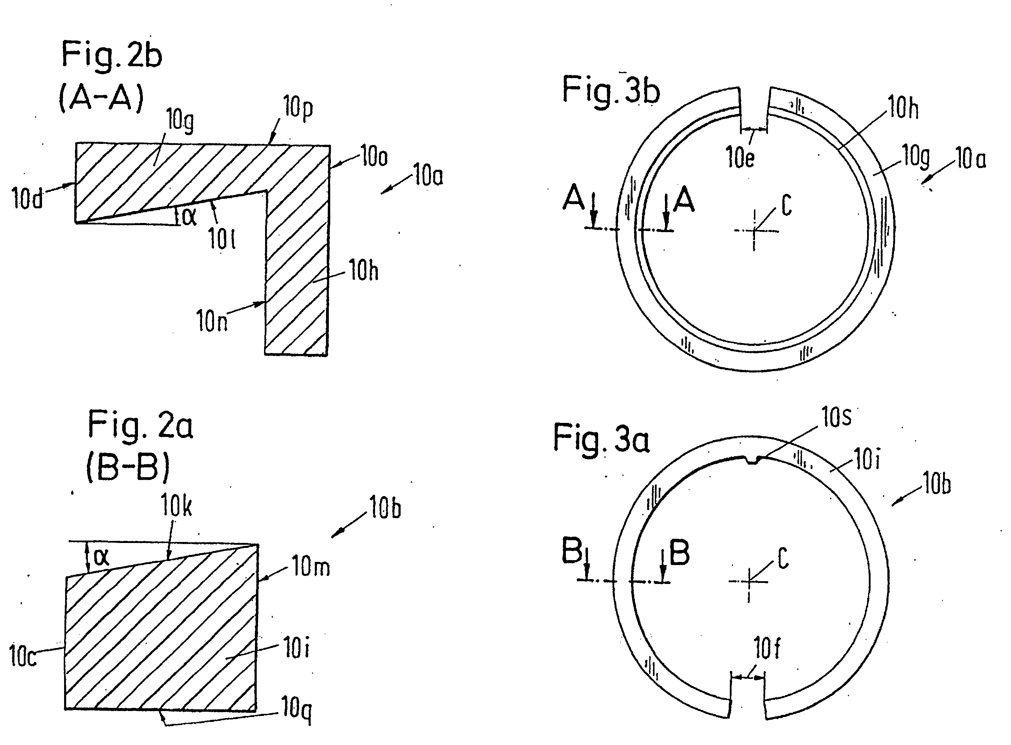

Der in den Figuren 4 und 5 dargestellte Kolbenring 10, umfassend die Ringe 10a,10b ist in den Figuren 3a, 3b mit einer Aufsicht und in den Figuren 2a, 2b mit einem Querschnitt ausführlich gezeigt. Die beiden Ringe 10a, 10b verlaufen kreisförmig um eine Mittenachse C. Fig. 3b zeigt den ersten Ring 10a des Kolbenringes 10, einen L-förmig oder annähernd L-förmig ausgestalteten ringförmigen Körper mit einer Stossstelle 10e. Dieser Ring weist zwei Schenkel 10g, 10h auf, einen parallel in Richtung der Achse C verlaufenden ersten Schenkel 10h und einen zweiten, radial oder ungefähr radial zur Achse C nach aussen verlaufenden Schenkel 10g. Die Breite der Stossstelle 10e ist derart ausgestaltet, dass dem ersten Ring 10a in Umfangsrichtung ein gewisser Federweg möglich ist.

Ein Querschnitt durch den ersten Ring 10a entlang der Linie A-A ist in Fig. 2b dargestellt. Der L-förmig ausgestaltete erste Ring 10a weisten einen parallel zur Achse C verlaufenden ersten Schenkel 10h auf, welcher eine Aussenfläche 10o sowie eine Innenfläche 10n aufweist. Der zweite, radial zur Achse C verlaufende zweite Schenkel 10g weist eine senkrecht zur Achse C verlaufende Aussenfläche 10p auf. Die Innenfläche 10l ist konusförmig verlaufend ausgestaltet und weist in radialer Richtung einen Winkel α zur Senkrechten der Achse C auf. Im vorliegenden Ausführungsbeispiel ist der zweite Schenkel 10g derart ausgestaltet, dass er, bezüglich der durch die Achse C vorgegebenen Richtung, beim ersten Schenkel 10h relativ schmal ausgestaltet ist und zur Peripherie hin, beziehungsweise zur Fläche 10d hin sich verbreitert. Der Querschnitt des zweiten Ringes 10b, welcher in Fig. 2a dargestellt ist, ist entsprechend dem Verlauf der beiden Innenflächen 10l,10n angepasst ausgestaltet. Der Ringkörper 10i weist vier Flächen auf, die der Zylinderwand 10c zugewandte Fläche, die dem Kammerring 8 zugewandte Fläche 10q sowie die beiden dem ersten Ring 10a zugewandten Flächen 10m,10k. Die beiden letztgenannten Flächen 10m,10k sind derart bezüglich dem ersten Ring 10a angepasst ausgestaltet, dass bei ineinander angeordneten Ringen 10a,10b die Flächen 10m,10k formschlüssig auf die beiden Innenflächen 10l,10n zu liegen kommen. Daher ist die Fläche 10k ebenfalls konusförmig, mit einem Neigungswinkel α radial zur Achse C verlaufend ausgestaltet.

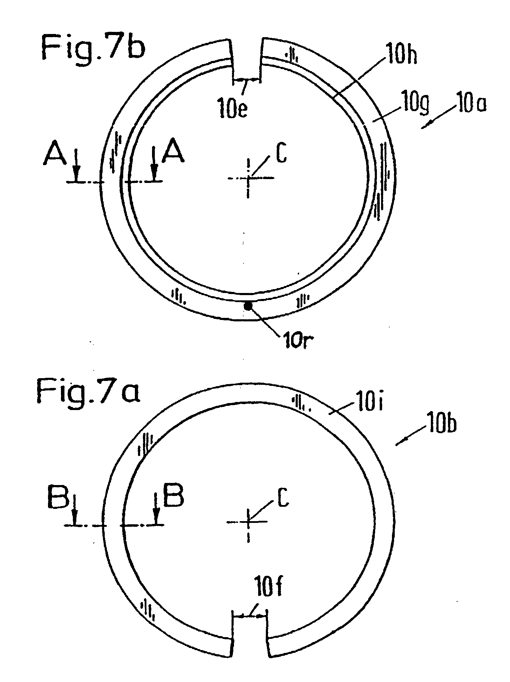

Fig. 3a zeigt eine Aufsicht auf den zweiten ringförmigen Körper 10b mit Stossstelle 10f, welcher Körper im weiteren als ein zweiter Ring 10b bezeichnet wird. Der Ringkörper 10i weist auf der einen Seite die Stossstelle 10f auf, und auf der dieser Stossstelle 10f gegenüberliegenden Seite eine gegen die Achse C hin vorstehende Nocke 10s auf. Beim zusammengebauten Kolbenring 10 wird der zweite Ring 10b über den ersten Ring 10a gelegt, unter Beibehaltung der in den Fig. 3a,3b dargestellten Lage, sodass die Nocke 10s zwischen die Stossstelle 10e des ersten Ringes 10a zu liegen kommt. Dadurch ist der zweite Ring 10b gegenüber dem ersten Ring 10a gegen eine gegenseitige Verdrehung gesichert, weil die Nocke 10s und der Schenkel 10h eine gegenseitige Bewegung begrenzen. Vorteilhafterweise ist die Nocke 10s in Umfangsrichtung schmaler ausgestaltet als die Breite der Stossstelle 10e, sodass der ersten Ring 10a an der Stossstelle 10e eine gewisse Beweglichkeit in Umfangsrichtung beibehält. Die Fig. 7a und Fig. 7b zeigen ein weiteres Ausführungsbeispiel einer Ausgestaltung der Ringe 10a,10b zur gegenseitigen Sicherung bezüglich einer Verdrehung. Am ersten Ring 10a ist an der der Stossstelle 10e gegenüberliegenden Seite ein in vertikaler Richtung verlaufender, zylinderförmiger Fixierstift 10r am Schenkel 10g angeordnet. Beim Zusammenbauen des Kolbenringes 10 wird der zweite Ring 10b über den ersten Ring 10a gelegt, unter Beibehaltung der in den Fig. 7a,7b dargestellten Lage, sodass der Fixierstift 10r zwischen die Stossstelle 10f des zweiten Ringes 10b zu liegen kommt. Dadurch ist der zweite Ring 10b gegenüber dem ersten Ring 10a bezüglich einer gegenseitigen Verdrehung gesichert. Die Ringe 10a,10b lassen sich in zusammengefügtem Zustand durch gleichzeitiges Aufspreizen beider Ringteile in die Nut eines einteiligen Kolbens 2 einlegen, wie dies in Fig. 4 dargestellt ist, oder ohne Aufspreizen einbauen in einen gebauten Kolben 2, wie in Fig. 5 dargestellt.

Ein Vorteil des erfindungsgemässen Kolbenringes 10 ist darin zu sehen, dass die Teilflächen 10l,10n,10k,10m der beiden Ringe 10a,10b auch während des Betriebes des Kolbenrings 10 über lange Zeit formschlüssig aufeinander liegen bleiben. Die beiden Ringe 10a,10b sind derart ausgestaltet, dass ein direktes Einwirken des unter Druck stehenden Gases 9 auf die Teilflächen 10l,10n,10k,10m möglichst verhindert wird. Der auf die Ringe 10a,10b wirkende Gasdruck 9 greift üblicherweise an der Stossstelle 10f an und bewirkt eine in Umfangsrichtung des ersten Ringes 10a wirkende Kraft, was bei einem Winkel α=0 ein Abheben des ersten Ringes 10a vom zweiten Ring 10b bewirken könnte, sodass der Gasdruck direkt auf die Teilflächen 10l,10n,10k,10m wirken würde. Ein derartiges direktes Einwirken des Gasdruckes auf die Teilflächen 10m,10k des zweiten Ringes 10b würde einen relativ schnellen Verschleiss des zweiten Ringes 10b zur Folge haben. Um diesen Effekt zu verhindern ist der erfindungsgemässe Ring derart ausgestaltet, dass ein Abheben des ersten Ringes 10a vom zweiten Ring 10b verhindert wird. Gemäss Fig. 4 wird der Kolbenring 10 durch das einwirkende Gas 9a in axialer Richtung gegen den Kammerring 8 und in radialer Richtung durch das einwirkende Gas 9b gegen die Wand des Zylinders 1 gedrückt. Der mit diesem Druck beaufschlagte erste Ring 10a übt entsprechende Kräfte auf den zweiten Ring 10b aus. Durch die konusförmige Ausgestaltung der Teilflächen 10l,10k bewirken die durch den Gasdruck angreifenden Kräfte eine verstärkte gegenseitige Verkeilung der beiden Ringe 10a,10b, sodass die Teilflächen 10k,10l,10m,10n verstärkt gegeneinander angepresst werden. Dadurch wird eine direkte Einwirkung des Gasdruckes auf die Teilflächen 10k,10l,10m,10n verhindert, was zu einem geringen Verschleiss des ersten Ringes 10a, einem gleichmässigen Verschleiss der beiden Ringe 10a, 10b, insbesondere der Teilflächen 10c, 10d, führt, und damit zu einer hohen Standzeit des Kolbenringes 10 führt.

Es gibt eine Vielzahl von Möglichkeiten zur Ausgestaltung der Teilflächen 10k,10l,10m,10n derart, dass bei zusammengesetzten und einem Gasdruck belasteten Ringen 10a,10b ein gegenseitiges Verkeilen auftritt, derart, dass die sich gegenseitig berührenden Teilflächen 10k,10l,10m,10n zusätzlich gegeneinander gepresst werden. Die Figuren 6a,6b zeigen einen Querschnitt durch einen ersten Ring 10a sowie einen zweiten Ring 10b eines weiteres Ausführungsbeispieles. Dabei sind die beiden Teilflächen 10m,10n zylinderförmig verlaufend ausgestaltet, parallel zur Achse C verlaufend. Die weiteren Teilflächen 10l,10k sind kurvenförmig verlaufend ausgestaltet, derart, dass sie bei zusammengesetztem Kolbenring 10 formschlüssig aufeinander zu liegen kommen. Die Innenfläche 10l,10k weist in der radial zur Achse C verlaufenden Richtung eine Neigung auf, wobei der Winkel zwischen einer Tangente zur Innenfläche 10l,10k und der Achse C im Bereich der Fläche 10d etwa 90° beträgt, und gegen den Schenkel 10h hin einen zunehmend spitzeren Winkel, das heisst einen kleiner als 90° werdenden Winkel einnimmt.

Die Ringe 10a,10b sind aus einem Kunststoff ausgebildet, insbesondere aus Kunststoffen wie Polytetrafluorethylen (PTFE), einem modifizierten Hochtemperatur-Polymer wie Polyetheretherketon (PEEK), Polyetherketon (PEK), Polyimid (PI), Polyphenylensulfid (PPS) Polybenzimidazol (PBI), Polyamidimid (PAI) oder einem modifizierten Epoxidharz. Die Hochtemperatur-Polymere sind Kunststoffe, die in reiner Form nicht trockenlauffähig sind, sodass die oben genannten Kunststoffe üblicherweise mit zusätzlichen Festschmierstoffen wie z.B. Kohle, Graphit, Molybdändisulfid oder PTFE gefüllt sind.

## Patentansprüche

1. Kolbenring (10) für einen trockenlaufenden Kolbenkompressor, bestehend aus einem ersten und zweiten ringförmigen Körper (10a,10b) mit Stossstellen (10e,10f), welche Ringe (10a,10b) bezüglich einer Achse C konzentrisch zueinander angeordnet sind, wobei der erste Ring (10a) eine im wesentlichen L-förmige Querschnittform aufweist, mit einem in Richtung der Achse C verlaufenden ersten Schenkel (10h) und einem radial zur Achse C nach aussen verlaufenden zweiten Schenkel (10g), und wobei der erste Schenkel (10h) eine Innenfläche (10n) und der zweite Schenkel (10g) eine Innenfläche (10l) aufweist, und wobei die Ringe (10a,10b) aus einem Material aus der Gruppe Polytetrafluorethylen (PTFE), modifiziertes Hochtemperatur-Polymer wie Polyetheretherketon (PEEK), Polyetherketon (PEK), Polyimid (PI), Polyphenylensulfid (PPS) Polybenzimidazol (PBI), Polyamidimid (PAI) oder modifiziertes Epoxidharz bestehen, wobei diese Materialien zusätzlichen Festschmierstoffen wie z.B. Kohle, Graphit, Molybdändisulfid oder PTFE enthalten können, **dadurch gekennzeichnet daß** die Innenfläche (10l) des zweiten Schenkels (10g) einen in radialer Richtung geneigten Verlauf aufweist, daß die Innenfläche (10l) des zweiten Schenkels des ersten Ringes (10a) in radialer Richtung unter Ausbildung eines spitzen Winkels, das heisst einem Winkel kleiner als 90°, zur Achse (C) verläuft, und daß der zweite Ring (10b) mit dessen dem ersten Ring (10a) zugewandten Flächen (10m, 10k) an den Innenflächen (10n,10l) des ersten Ringes (10a) formschlüssig anliegt.

2. Kolbenring bestehend aus einem ersten und zweiten ringförmigen Körper (10a,10b) mit Stossstellen (10e,10f), welche Ringe (10a,10b) zumindest je zwei gegenseitig berührende Teilflächen (10l,10k;10m,10n) aufweisen und bezüglich einer Achse C konzentrisch zueinander verlaufend angeordnet sind, und wobei der Kolbenring (10) aus einem Kunststoff ausgebildet ist, **dadurch gekennzeichnet daß** die berührenden Teilflächen (10l,10k;10m,10n) gegenseitig formschlüssig verlaufend ausgestaltet sind, und daß die Teilflächen (10k,10m; 10l,10n) jedes Ringes (10a,10b) sich unter einem spitzen Winkel treffen, um durch ein während einem Betriebszustand unter Druck am Kolbenring anliegendes Fluid ein erhöhtes, gegenseitiges Halten der Ringe (10a,10b) an den berührenden Teilflächen (10l,10k;10m,10n) zu bewirken.

3. Kolbenring nach Anspruch 1 oder 2, **dadurch gekennzeichnet, dass** die Innenfläche (10l) des zweiten Schenkels des ersten Ringes (10a) als eine konisch verlaufende Fläche ausgebildet ist.

4. Kolbenring nach Anspruch 1 oder 2, **dadurch gekennzeichnet, dass** die Innenfläche (10l) des zweiten Schenkels des ersten Ringes (10a) als eine in radialer Richtung gekrümmt verlaufende Fläche ausgebildet ist.

5. Kolbenring nach einem der Ansprüche 1 bis 4, **dadurch gekennzeichnet, dass** der zweite Ring (10b) ein in radialer Richtung zur Achse (C) hin vorstehendes Teil (10s) aufweist, welches in die Stossstelle (10e) des ersten Ringes (10a) eingreift, um ein gegenseitiges Verdrehen der beiden Ringe (10a,10b) zu verhindern.

6. Kolbenring (10) nach einem der Ansprüche 1 bis 6, **dadurch gekennzeichnet, dass** der erste Ring (10a) des Kolbenringes (10) in einem Kolben (2) zur Druckseite hin orientiert angeordnet ist.

7. Trockenlaufender Kolbenkompressor mit einem Kolbenring gemäss einem der Ansprüche 1 bis 6.

## Claims

1. Piston ring (10) for a dry running piston compressor, consisting of a first and a second ring-shaped body (10a, 10b) with ring gaps (10e, 10f), said rings (10a, 10b) being arranged concentric to one another with respect to an axis C, with the first ring (10a) having an essentially L-shaped cross-section, with a first limb (10h) extending in the direction of the axis C and a second limb (10g) extending radially outwardly relative to the axis C, and with the first limb (10h) having an inner surface (10n) and the second limb (10g) having an inner surface (10l), and with the rings (10a, 10b) consisting of a material in the group: polytetraflouorethylene (PTFE), modified high-temperature polymer such as polyetheretherketone (PEEK), polyetherketone (PEK), polyimide (PI), polyphenylene sulphide (PPS), polybenzimidazole (PBI), polyamidimide (PAI) or modified epoxy resin, with the possibility of these materials containing additional solid lubricants such as e.g. carbon, graphite, molybdenum disulphide or PTFE, **characterised in that** the inner surface (10l) of the second limb (10g) having a slope in the radial direction, that the inner surface (10l) of the second limb of the first ring (10a) extending in the radial direction while subtending an acute angle, i.e. an angle less than 90°, with the axis (C), and that the surfaces (10m, 10k) of the second ring (10b) which face the first ring (10a) lying in contact with the inner surfaces (10n, 10l) of the first ring (10a) in a form-fitted manner.

2. Piston ring consisting of a first and a second ring-shaped body (10a, 10b) with ring gaps (10e, 10f), said rings (10a, 10b) each having at least two mutually touching subsurfaces (10l, 10k; 10m, 10n), being arranged to extend concentric to one another with respect to an axis (C), and with the piston ring (10) being constructed of a plastic, **characterised in that** the touching subsurfaces (10l, 10k; 10m, 10n) being arranged to be mutually form-fitting, and that the subsurfaces (10l, 10k; 10m, 10n) of each of the rings (10a, 10b) meeting at an acute angle in order to effect an increased mutual holding of the rings (10a, 10b) at the touching subsurfaces (10l, 10k; 10m, 10n) by a fluid lying in contact with the piston ring under pressure during an operating state.

3. Piston ring in accordance with claim 1 or claim 2 **characterised in that** the inner surface (10l) of the second limb of the first ring (10a) is executed as a conically extending surface.

4. Piston ring in accordance with claim 1 or claim 2 **characterised in that** the inner surface (10l) of the second limb of the first ring (10a) is executed as a surface extending in a curve in the radial direction.

5. Piston ring in accordance with one of the claims 1 to 4 **characterised in that** the second ring (10b) has a part (10s) protruding in the radial direction towards the axis (C) which engages into the ring gap (10e) of the first ring (10a) in order to prevent a mutual rotation of the two rings (10a, 10b).

6. Piston ring in accordance with one of the claims 1 to 6 **characterised in that** the first ring (10a) of the piston ring (10) is arranged in a piston (2) towards the pressure side.

7. Dry running piston compressor with a piston ring in accordance with one of the claims 1 to 6.

## Revendications

1. Segment de piston (10) pour un compresseur à piston sec, constitué d'un premier et d'un second corps annulaire (10a, 10b) avec des joints (10e, 10f), lesdits anneaux (10a, 10b) étant disposés relativement à un axe C d'une manière concentrique l'un relativement à l'autre, où le premier anneau (10a) présente une forme en section transversale sensiblement en L, avec une première branche (10h) s'étendant dans la direction de l'axe C et une seconde branche (10g) s'étendant radialement à l'axe C vers l'extérieur, et où la première branche (10h) présente une face intérieure (10n) et la seconde branche (10g) une face intérieure (10l), et où les anneaux (10a, 10b) sont réalisés en un matériau du groupe de polytétrafluoroéthylène (PTFE), de polymère haute température modifiée comme le polyétheréthercétone (PEEK), de polyéthercétone (PEK), de polyimide (PI), de sulfure de polyphénylène (PPS), de polybenzimidazole (PBI), de polyamidimide (PAI) ou de résine époxy modifiée, où ces matériaux peuvent contenir des lubrifiants solides additionnels comme, par exemple, du carbone, du graphite, du bisulfure de molybdène ou du PTFE, **caractérisé en ce que** la face intérieure (10l) de la seconde branche (10g) présente une allure inclinée dans la direction radiale, **en ce que** la face intérieure (10l) de la seconde branche du premier anneau (10a) s'étend dans la direction radiale en formant un angle aigu, c'est-à-dire un angle inférieur à 90° à l'axe C et **en ce que** le second anneau (10b) s'applique par concordance des formes avec ses faces (10m, 10k) orientées vers le premier anneau (10a) aux faces intérieures (10n, 10l) du premier anneau (10a).

2. Segment de piston constitué d'un premier et d'un second corps annulaire (10a, 10b) avec des joints (10e, 10f), ces anneaux (10a, 10b) présentant au moins respectivement deux faces partielles (10l, 10k ; 10m, 10n) venant mutuellement en contact et sont disposés pour s'étendre concentriquement l'une à l'autre relativement à un axe C, et où le segment de piston (10) est réalisé en un matériau synthétique, **caractérisé en ce que** les faces partielles en contact (10l, 10k, 10m, 10n) sont réalisées pour s'étendre mutuellement par concordance des formes, et **en ce que** les faces partielles (10k, 10m ; 10l, 10n) de chaque anneau (10a, 10b) se rencontrent sous un angle aigu pour provoquer par un fluide s'appliquant pendant un état de fonctionnement sous pression au segment de piston une plus grande retenue mutuelle des anneaux (10a, 10b) aux faces partielles en contact (10l, 10k ; 10m, 10n).

3. Segment de piston selon la revendication 1 ou 2, **caractérisé en ce que** la face intérieure (10l) de la seconde branche du premier anneau (10a) est réalisée comme une face s'étendant d'une manière conique.

4. Segment de piston selon la revendication 1 ou 2, **caractérisé en ce que** la face intérieure (10l) de la seconde branche du premier anneau (10a) est réalisée comme une face courbée dans la direction radiale.

5. Segment de piston selon l'une des revendications 1 à 4, **caractérisé en ce que** le second anneau (10b) présente une partie (10s) faisant saillie dans la direction radiale vers l'axe (C) qui s'engage dans le joint (10e) du premier anneau (10a) pour empêcher une rotation mutuelle des deux anneaux (10a, 10b).

6. Segment de piston (10) selon l'une des revendications 1 à 6, **caractérisé en ce que** le premier anneau (10a) du segment de piston (10) est disposé dans un piston (2) en étant orienté vers le côté pression.

7. Compresseur à piston sec avec un segment de piston selon l'une des revendications 1 à 6.
